# EUROPÄISCHE PATENTANMELDUNG

(11) **EP 2 003 332 A1**
(43) Veröffentlichungstag der Anmeldung: **17.12.2008**
(21) Anmeldenummer: 07011468.1
(22) Anmeldetag: 12.06.2007
(51) Int. Cl.: F03B 17/06

(54) **Wasserkraftanlage**

(71) Anmelder: Rehart GmbH, 91725 Ehingen (DE)
(72) Erfinder: Wolff, Gerhard, 91550 Dinkelsbühl (DE)
(74) Vertreter: Nunnenkamp, Jörg

(57) **Zusammenfassung**

Vorgestellt wird eine Wasserkraftanlage zum Erzeugen elektrischer Energie durch Umwandlung von Strömungsenergie eines strömenden Gewässers. Die Anlage ist mit wenigstens einer Rotoreinheit (3,4) und einem von der Rotoreinheit (3,4) angetriebenen Generator (5) sowie wenigstens einem Schwimmkörper (6) ausgerüstet. Die Rotoreinheit (3,4) ist als ein- oder mehrgängige Wasserkraftschnecke (3,4) ausgeführt.

## Beschreibung

Die Erfindung betrifft eine Wasserkraftanlage zum Erzeugen elektrischer Energie durch Umwandlung von Strömungsenergie eines strömenden Gewässers, mit wenigstens einer Rotoreinheit und einem von der Rotoreinheit angetriebenen Generator sowie ggf. wenigstens einem Schwimmkörper.

Solche Wasserkraftanlagen sind grundsätzlich bekannt, wozu auf die US 4 868 408 verwiesen sei. Als Rotoreinheit kommt eine Propellerturbine zum Einsatz. Ein elektrischer Generator ist außerhalb des strömenden Gewässers platziert.

Daneben kennt man grundsätzlich so genannte Wasserkraftschnecken, die sich des Prinzips der so genannten "archimedischen Schraube" bedienen. Ein Beispiel hierfür wird in der DE 41 39 134 C2 vorgestellt, wo eine solche Wasserkraftschnecke in Verbindung mit einem Wehr vorgestellt wird. Tatsächlich ist hier ein offener nicht drehender Trog realisiert, in dem sich eine ein- oder mehrgängige Schnecke dreht. Der Schnecke wird am oberen Ende Wasser zugeführt, welches sich unter Einwirkung der Schwerkraft in der Schnecke abwärts bewegt und diese dadurch in Drehung versetzt. Auf diese Weise wird die im Wasser enthaltene Energie (Lageenergie) in Bewegungsenergie umgewandelt.

Vergleichbar arbeitet die Scheckentrogpumpe mit veränderlicher Förderhöhe entsprechend der DE 1 553 132. - Die bekannten Wasserkraftanlagen haben sich grundsätzlich bewährt, sind jedoch hinsichtlich der konstruktiven Auslegung und insbesondere der Baukosten verbesserungsfähig. So ist es bei den letztgenannten Wasserkraftschnecken erforderlich, ein zumeist noch höhenveränderliches Wehr zu bauen bzw. die Wasserkraftschnecke in ein solches zu integrieren, Im Hinblick auf die erstgenannte US 4 868 408 fällt auf, dass für die einwandfreie Anströmung der Turbine spezielle Maßnahmen zur Wasserleitung und -führung erforderlich sind. Außerdem sind solche Turbinen von ihrer Herstellung her grundsätzlich kostenträchtig. Hier will die Erfindung insgesamt Abhilfe schaffen.

Der Erfindung liegt das technische Problem zugrunde, eine derartige Wasserkraftanlage so weiter zu entwickeln, dass die Herstellungskosten und erforderlichen baulichen Maßnahmen zur Inbetriebnahme deutlich reduziert sind.

Zur Lösung dieser technischen Problemstellung schlägt die Erfindung bei einer gattungsgemäßen Wasserkraftanlage vor, dass die Rotoreinheit als ein- oder mehrgängige Wasserkraftschnecke ausgebildet ist.

Im Rahmen der Erfindung kommt also eine an sich bekannte Wasserkraftschnecke mit hiervon angetriebenem Generator zum Einsatz, die sich jedoch - im Gegensatz zu beispielsweise der Lehre entsprechend der DE 41 39 134 C2 - nicht an oder in einem Wehr befindet und folglich die damit verbundene Fallhöhe von beispielsweise Wasser in Bewegungsenergie und elektrische Energie umsetzt, sondern vielmehr mit Hilfe des wenigstens eines Schwimmkörpers direkt im strömenden Gewässer platziert wird, - Anstelle des Schwimmkörpers kann die erfindungsgemäße Wasserkraftschnecke auch direkt im Flussbett verankert werden, wozu beispielsweise ein im Flussbett vorgesehener Rahmen dienen mag.

Der Einsatz der erfindungsgemäßen Wasserkraftanlage empfiehlt sich grundsätzlich in jedweden strömenden Gewässern, beispielsweise in natürlichen Flüssen aber auch an Ausläufen von Staudämmen, im Abflussbereich von Kläranlagen, in Bereichen mit großem Tidenhub unter ausnutzen der Gezeitenströmung, in Abwasserleitungen, in Kühlleitungen von Kraftwerken usw. Dabei reicht bereits ein geringer Wasserpegel aus, um die beschriebene Wasserkraftanlage zur Energieerzeugung nutzen zu können. D. h., die vorgenannte Anlage ist unter anderem auch für den Einsatz in Niedriggewässern, in Gebirgsbächen etc. prädestiniert, zumal sich die Baugröße in weiten Bereichen variieren lässt. So lassen sich Wasserkraftschnecken mit einer Länge von ca. 1 m ebenso herstellen, wie solche mit mehr als 10 m Länge.

Insgesamt kann die beschriebene Wasserkraftanlage sowohl im Gewässer mit Hilfe des wenigstens einen Schwimmkörpers schwimmen, als auch unterhalb der Wasseroberfläche ähnlich einem U-Boot schweben. Das gleiche gilt für den Fall, dass anstelle des Schwimmkörpers mit einer Festinstallation der Wasserkraftschnecke in einem Rahmen oder einem Gerüst auf dem Flussbett gearbeitet wird. Selbstverständlich lassen sich die Maßnahmen auch kombinieren, d. h., dass die Wasserkraftschnecke mit einem beispielsweise im Flussbett verankerten Rahmen und zusätzlich einem oder mehreren Schwimmkörpern ausgerüstet ist.

In diesem Zusammenhang hat es sich bewährt, wenn der wenigstens eine Schwimmkörper hinsichtlich seines erzeugten Auftriebes variabel gestaltet wird. Denkbar ist es hier, den Schwimmkörper je nach Gewicht der übrigen Wasserkraftanlage beispielsweise mehr oder minder zu fluten und/oder mit Ballast auszurüsten. Dadurch kann die Wasserkraftschnecke mehr oder minder weit in das strömende Gewässer eintauchen und lässt sich die Energieausnutzung optimieren.

Darüber hinaus hat es sich bewährt, wenn die Wasserkraftschnecke in einem vorzugsweise geöffneten oder (nach oben hin) offenen Trog aufgenommen wird, welcher sich im Vergleich zur Wasserkraftschnecke als solcher nicht dreht. Der fragliche Trog kann beispielsweise im Bereich der Wasseroberfläche geöffnet sein. Selbstverständlich ist auch eine geschlossene Gestaltung des Troges denkbar und liegt im Rahmen der Erfindung,

in beiden Fällen ist der Trog bzw. die Wasserkraftanlage insgesamt mit einem Einlauftrichter für die Wasserkraftschnecke vorteilhaft ausgerüstet. Selbstverständlich können auch mehrere Einlauftrichter realisiert werden. Mit Hilfe des Einlauftrichters wird das Wasser des strömenden Gewässers unter einem bestimmten Winkel auf die Wasserkraftschnecke geleitet und gegebenenfalls beschleunigt. Das kann durch eine entsprechende Verengung des Einlauftrichters vom Einlauf bis zu seinem Auslauf in unmittelbarer Nachbarschaft zur Wasserkraftschnecke umgesetzt werden. Dabei versteht es sich, dass der Einlauftrichter bei Bedarf geschlossen werden kann, um beispielsweise die Wasserkraftschnecke bei Sturm zu schützen oder Beschädigungen durch beispielsweise Treibgut zu vermeiden.

In der Regel wird die erfindungsgemäße Wasserkraftanlage schwimmend oder schwebend im zugehörigen strömenden Gewässer ortsfest in beispielsweise einem Flussbett verankert gehalten. Selbstverständlich ist es auch möglich und liegt im Rahmen der Erfindung, die betreffende Wasserkraftanlage mit dem strömenden Gewässer mitzubewegen, entgegen der Strömungsrichtung oder auch quer hierzu eine Bewegung vollführen zu lassen usw.. Eine solche Ortsvariabilität der Wasserkraftanlage empfiehlt sich beispielsweise dann und für den Fall, wenn das strömende Gewässer jahreszeitenbedingt in bestimmten Bereichen trocken fällt oder keinen ausreichenden Tiefgang mehr aufweist und/oder sich die Strömungsverhältnisse ändern.

In diesem Zusammenhang ist es beispielsweise denkbar, die Wasserkraftanlage jeweils im Bereich der höchsten Strömungsgeschwindigkeit innerhalb des strömenden Gewässers zu platzieren. Die jeweilige Strömungsgeschwindigkeit lässt sich mit Hilfe von einem oder mehreren Geschwindigkeitsmessern unschwer feststellen. Gleichzeitig kann die Wasserkraftanlage hinsichtlich ihres Ortes verändert werden, um jeweils den Bereich größter Strömungsgeschwindigkeit zu erfassen und ein Maximum an elektrischer Energie ausgangsseitig des Generators zu erzeugen.

In diesem Zusammenhang hat es sich weiter als günstig erwiesen, wenn die Wasserkraftschnecke unter einem bestimmten Anströmwinkel gegenüber der Strömungsrichtung in dem strömenden Gewässer verankert wird. Meistens hat sich ein Anströmwinkel von ca. 45° als besonders günstig erwiesen. In diesem Zusammenhang ist die Wasserkraftschnecke in der Regel mit wenigstens einer Wendel aus Schneckenflügeln ausgerüstet. Diese Schneckenflügel weisen einen vorgegebenen Winkel gegenüber einem Schneckenkörper auf, der im einfachsten Fall zylindrisch ausgebildet ist. Dazu stehen die jeweiligen Schneckenflügel senkrecht auf dem (zylindrischen) Schneckenkörper auf und schließen in Aufsicht auf dessen Umfangsfläche mit seiner Längserstreckung den besagten Winkel ein.

Als Winkel des bzw. der Schneckenflügel gegenüber dem Schneckenkörper hat sich ein solcher von ca. 60° als besonders günstig erwiesen. Tatsächlich werden unter Berücksichtigung des vorerwähnten Winkels von 60° der Schneckenflügel gegenüber dem Schneckenkörper und bei Anströmwinkeln im Bereich von ca. 45° elektrische Ausgangsleistungen der Wasserkraftanlage beobachtet, die nahezu an diejenigen heranreichen, welche mit Wasserkraftpropellerturbinen ähnlich der US 4 868 408 erreicht werden, und war bei demgegenüber deutlich verringertem konstruktiven und baulichem Aufwand. Dadurch eignen sich die beschriebenen Wasserkraftanlagen für eine flächendeckende Anwendung, und zwar grundsätzlich in verschiedenen Baugrößen.

Es hat sich schlussendlich noch bewährt, wenn der Generator unmittelbar der Wasserkraftschnecke zugeordnet ist und mit dieser eine Baueinheit bildet.

Dabei ist der Generator vorteilhaft mit dem Schneckenkörper bzw. seiner Achse oder Rotorachse verbunden. Die Achse bzw. Rotorachse ist dabei so angeordnet, dass das schneckenferne Generatorende aus dem Gewässer herausragt, während das schneckennahe bzw. der Schnecke zugewandte Generatorende entsprechend in das Gewässer eintaucht. Durch diese Anordnung werden die Strömungsverhältnisse begünstigt.

Im Detail ist der Generator in der Regel unmittelbar an den (zylinderförmigen) Schneckenkörper meistens endseitig angeflanscht, und zwar regelmäßig mit dessen Rotorachse verbunden. Das kann direkt oder über ein Getriebe je nach Auslegung von einerseits der Wasserkraftschnecke und andererseits dem Generator geschehen. Dabei sollte und kann die erfindungsgemäße Wasserkraftanlage vorteilhaft im Uferbereich des Gewässers platziert werden, um etwaigen Schiffsverkehr nicht zu behindern. Außerdem kann die Wasserkraftanlage durch ein äußeres gitterartiges Gehäuse vor beispielsweise Treibgut oder anderen mechanischen Beeinträchtigungen geschützt werden.

Im Ergebnis wird eine Wasserkraftanlage zur Verfügung gestellt, die sich durch einen besonders einfachen Aufbau auszeichnet, welcher zudem hinsichtlich seiner Baugröße unschwer variiert und an die jeweiligen Gegebenheiten angepasst werden kann. Das gelingt insgesamt auf kostengünstige Art und Weise. Hierin sind die wesentlichen Vorteile zu sehen.

Im Folgenden wird die Erfindung anhand einer lediglich ein Ausführungsbeispiel darstellenden Zeichnung näher erläutert; es zeigen:
- Fig.1: eine erfindungsgemäße Wasserkraftanlage in schematischer Aufsicht und
- Fig. 2: einen Querschnitt durch die Wasserttraftanlage nach Fig. 1.

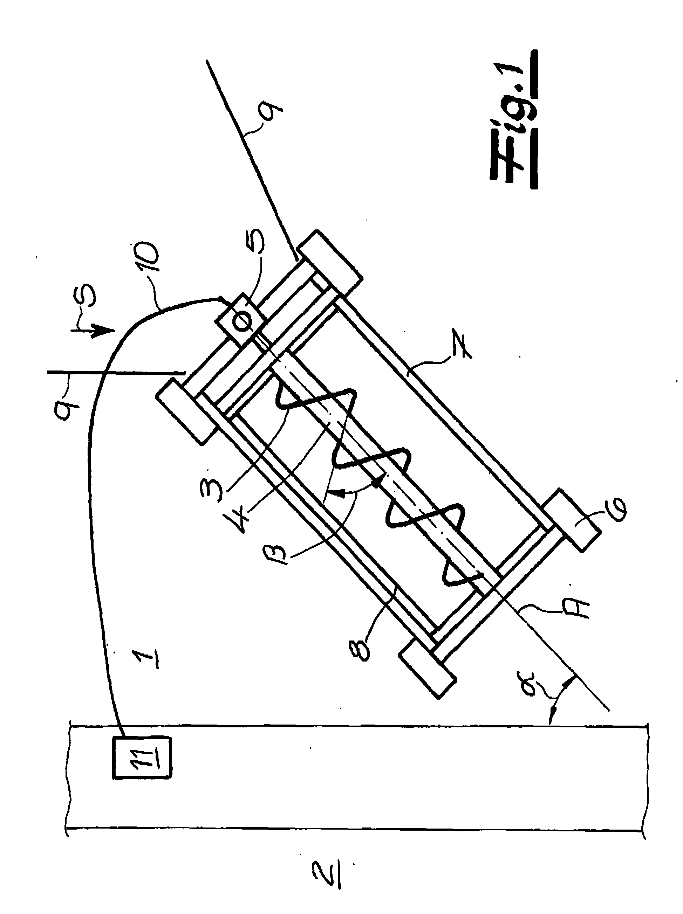

In den Figuren ist eine Wasserkraftanlage dargestellt, die zum Erzeugen elektrischer Energie eingesetzt wird, und zwar durch Umwandlung von Strömungsenergie eines strömenden Gewässers. Bei dem strömenden Gewässer handelt es sich vorliegend um einen Fluss, von dem in der Fig. 1 ein Hauptarm 1 dargestellt ist, wohingegen mit dem Bezugszeichen 2 ein Uferbereich gekennzeichnet wird. Strömungsenergie des strömenden Gewässers wird nun mit Hilfe der gezeigten Wasserkraftanlage in elektrische Energie umgewandelt. Die Strömungsenergie ist durch einen Pfeil der Strömungsrichtung S des Gewässers angedeutet.

Zu diesem Zweck ist die dargestellte Wasserkraftanlage mit wenigstens einer Rotoreinheit 3, 4 und einem von der Rotoreinheit 3, 4 angetriebenen Generator 5 sowie zumindest einem Schwimmkörper 6 ausgerüstet. Tatsächlich sind vorliegend vier Schwimmkörper 6 vorgesehen, welche jeweils in Eckbereichen eines Rahmens 7 zur Aufnahme und Halterung der Wasserkraftanlage bzw. der Rotoreinheit 3, 4 platziert sind. Anstelle den Rahmen 7 und folglich die dargestellte Wasserkraftanlage insgesamt mit Hilfe der Schwimmkörper 6 schwimmend oder schwebend in dem strömenden Gewässer bzw. dem Hauptarm 1 zu halten, kann der Rahmen 7 grundsätzlich auch im Flussbett, am Boden, am Ufer etc. verankert werden. Das ist jedoch nicht gezeigt. In jedem Fall wird der Rahmen 7 und damit die Wasserkraftanlage insgesamt so gegenüber dem strömenden Gewässer bzw. dem Hauptarm 1 fixiert, dass unter Umständen unterschiedliche Wasserstände ausgeglichen werden.

So oder so ist in dem Rahmen bzw. nach dem Ausführungsbeispiel offenen Rechteckrahmen 7 die Rotoreinheit 3, 4 gelagert. Gleiches gilt für den Generator 5. Der Generator 5 ist an ein Ende der Rotoreinheit 3, 4 angeflanscht und bildet mit dieser eine austauschbare Baueinheit 3, 4, 5, Bei der Rotoreinheit 3, 4 handelt es sich im Ausführungsbeispiel um eine ein- oder mehrgängige Wasserkraftschnecke 3, 4, welche sich ihrerseits im Rahmen des Beispiels aus einer Wendel mit Schneckenflügeln 4 sowie einem Schneckenkörper 3 zusammensetzt. Die Schneckenflügel 4 sind an dem zylindrischen Schneckenkörper 3 angebracht, und zwar unter einem vorgegebenen Winkel β gegenüber seiner Längserstreckung, welcher im Ausführungsbeispiel Werte von ca. 60° gegenüber einer Achse A der Wasserkraftschnecke 3, 4 annimmt.

Die Wasserkraftschnecke 3, 4 wird insgesamt in einem geöffneten Trog 8 aufgenommen, welcher sich im Gegensatz zu der Wasserkraftschnecke 3, 4 nicht dreht und ortsfest im Flussbett oder einem vergleichbaren strömenden Gewässer verankert ist. Grundsätzlich kann der Trog 8 und mit ihm die Wasserkraftschnecke 3, 4 insgesamt auch hinsichtlich ihrer Position im Hauptarm 1 des strömenden Gewässers verändert werden. Dadurch kann die Wasserkraftanlage beispielsweise unterschiedlichen Wasserständen, jahreszeitlich bedingten Änderungen der Strömungsgeschwindigkeit, der Strömungsrichtung etc. unschwer Rechnung tragen.

Tatsächlich wird die Wasserkraftschnecke 3, 4 vorliegend schwimmend in dem betreffenden Gewässer gehalten. Es ist grundsätzlich auch möglich, die Wasserkraftschnecke 3, 4 schwebend unterhalb einer Wasseroberfläche O in dem Gewässer zu platzieren. Ebenso liegt es im Rahmen der Erfindung, nicht mit einem geöffneten, sondern einem geschlossenen Trog 8 zu arbeiten.

In jedem Fall verfügt der Trog 8 bzw. die Wasserkraftschnecke 3, 4 insgesamt über einen Einlauftrichter 9. Mit Hilfe des Einlauftrichters 9 wird das Wasser des Gewässers in Strömungsrichtung S in Richtung auf die Wasserkraftschnecke 3, 4 geleitet und vom Einlauf des Einlauftrichters 9 bis zum Erreichen der Wasserkraftschnecke 3, 4 gegebenenfalls noch beschleunigt.

Der fragliche Einlauftrichter 9 kann - falls erforderlich - geschlossen werden, um die Wasserkraftschnecke 3, 4 vor zu starken Strömungen, Treibgut etc. im Bedarfsfall zu schützen. Man erkennt, dass die Wasserkraftschnecke 3, 4 insgesamt unter Berücksichtigung eines Anströmwinkels α gegenüber der Strömungsrichtung S im Hauptarm 1 bzw. in dem strömenden Gewässer eine Anordnung findet. Tatsächlich wird der vorerwähnte Anströmwinkel α zwischen der Strömungsrichtung S und der Achse A der Wasserkraftschnecke 3, 4 eingeschlossen. An dieser Stelle hat sich ein Anströmwinkel α von ca. 45° als besonders günstig erwiesen, was die Ausbeute an elektrischer Energie ausgangsseitig des Generators 5 angeht.

Der Generator 5 ist unmittelbar auf der Achse A der Wasserkraftschnecke 3, 4 bzw. des Schneckenkörpers 4 angeordnet und an den Schneckenkörper 4 angeflanscht. Selbstverständlich kann im Bedarfsfall ein Getriebe zwischengeschaltet sein. Der vom Generator 5 erzeugte Strom wird mit Hilfe einer elektrischen Energieleitung 10 an eine ortsfeste Anschlusseinrichtung 11 im Uferbereich bzw. am Ufer 2 übertragen und von dort aus in ein nicht näher dargestelltes Stromverteilungsnetz eingespeist.

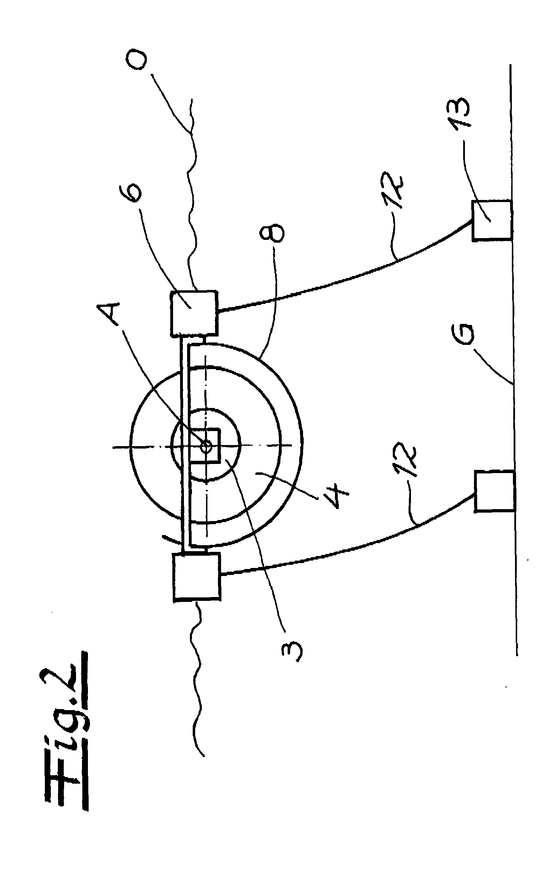

Man erkennt anhand einer vergleichenden Betrachtung der Fig. 1 und 2, dass die Wasserkraftschnecke 3, 4 unter Einstellung bzw. Berücksichtigung des Anströmwinkels α von ca. 45° gegenüber der Strömungsrichtung S in dem strömenden Gewässer verankert ist. Zu diesem Zweck ist der Rahmen 7 bzw. sind die Schwimmkörper 6 mit Hilfe einer oder mehrerer Befestigungsmittel 12, 13 am Grund G des Nebenarmes 1 im Ausführungsbeispiel festgelegt. Bei den Befestigungsmitteln 12, 13 handelt es sich vorliegend jeweils um ein Befestigungsseil 12, welches in Verbindung mit einem Anker bzw. einem Gewicht 13 für die erforderliche Verankerung sorgt. Alternativ oder zusätzlich ist natürlich auch eine Befestigung im Uferbereich bzw. am Ufer 2 möglich und wird von der Erfindung umfasst.

Das Befestigungsseil 12 kann hinsichtlich seiner Länge verändert werden, um die Wasserkraftschnecke 3, 4 einerseits in beispielsweise Quer- und Längsrichtung innerhalb des Nebenarmes 1 bzw. allgemein des strömenden Gewässers in ihrer Position zu verändern. Gleichzeitig oder alternativ kann das jeweilige Befestigungsmittel 12 andererseits dafür sorgen, dass die Wasserkraftschnecke 3, 4 bzw. die Wasserkraftanlage insgesamt entweder schwimmend oder schwebend in dem betreffenden Gewässer gehalten wird.

## Patentansprüche

1. Wasserkraftanlage zum Erzeugen elektrischer Energie durch Umwandlung von Strömungsenergie eines strömenden Gewässers, mit wenigstens einer Rotoreinheit (3, 4) und einem von der Rotoreinheit (3, 4) angetriebenen Generator (5) sowie ggf. wenigstens einem Schwimmkörper (6),
**dadurch gekennzeichnet, dass**
- die Rotoreinheit (3, 4) als ein- oder mehrgängige Wasserkraftschnecke (3, 4) ausgebildet ist.

2. Wasserkrattanlage nach Anspruch 1, **dadurch gekennzeichnet, dass** die Wasserkraftschnecke (3, 4) in einem vorzugsweise geöffneten Trog (8) aufgenommen ist.

3. Wasserkraftanlage nach Anspruch 1 oder 2, **dadurch gekennzeichnet, dass** die Wasserkraftschnecke (3, 4) ortsfest in beispielsweise einem Flussbett oder einem vergleichbaren strömenden Gewässer verankert ist.

4. Wasserkraftanlage nach einem der Ansprüche 1 bis 3, **dadurch gekennzeichnet, dass** zwei oder mehr verteilt an einem Rahmen (7) angeordnete Schwimmkörper (6) vorgesehen sind.

5. Wasserkraftanlage nach einem der Ansprüche 1 bis 4, **dadurch gekennzeichnet, dass** der jeweilige Schwimmkörper (6) hinsichtlich seines erzeugten Auftriebes variabel gestaltet ist.

6. Wasserkraftanlage nach einem der Ansprüche 1 bis 5, **dadurch gekennzeichnet, dass** ein Einlauftrichter (9) für die Wasserkraftschnecke (3, 4) realisiert ist.

7. Wasserkraftanlage nach einem der Ansprüche 1 bis 6, **dadurch gekennzeichnet, dass** die Wasserkraftschnecke (3, 4) unter einem bestimmten Anströmwinkel (α) gegenüber einer Strömungsrichtung (S) in dem strömenden Gewässer schwimmt oder schwebt.

8. Wasserkraftanlage nach Anspruch 7, **dadurch gekennzeichnet, dass** der Anströmwinkel (α) Werte von ca. 45° einnimmt.

9. Wasserkraftanlage nach einem der Ansprüche 1 bis 8, **dadurch gekennzeichnet, dass** die Wasserkraftschnecke (3, 4) mit zumindest einer Wendel aus Schneckenflügeln (4) ausgerüstet ist, welche einen vorgegebenen Winkel (β) gegenüber einem Schneckenkörper (3) aufweisen.

10. Wasserkraftanlage nach einem der Ansprüche 1 bis 9, **dadurch gekennzeichnet, dass** der Generator (5) unmittelbar der Wasserkraftschnecke (3, 4) zugeordnet ist und mit dieser eine Baueinheit (3, 4, 5) bildet.

11. Wasserkraftanlage nach einem der Ansprüche 1 bis 10, **dadurch gekennzeichnet, dass** diese in einem Hauptarm (1) des strömenden Gewässers angeordnet ist.

12. Verwendung einer Wasserkraftschnecke (3, 4) mit wenigstens einem Schwimmkörper (6) zum Erzeugen elektrischer Energie durch Umwandlung von Strömungsenergie eines strömenden Gewässers, in dem die Wasserkraftschnecke (3, 4) als Wasserkraftanlage in dem betreffenden Gewässer schwimmend oder schwebend platziert wird.

13. Verwendung nach Anspruch 12, **dadurch gekennzeichnet, dass** es sich bei dem strömenden Gewässer um den Abfluss einer Kläranlage, eine Abflussleitung, einen Fluss, einen Gebirgsbach, einen Meerbereich mit Gezeitenströmung etc. handelt.
